Europäisches Patentamt

European Patent Office

Office européen des brevets

(19)

(11) Veröffentlichungsnummer: **0 090 210**
**B2**

(12) **NEUE EUROPÄISCHE PATENTSCHRIFT**

(45) Veröffentlichungstag der neuen Patentschrift:
08.08.90

(51) Int. Cl.⁵: **H 04 B 7/12, H 04 L 1/04**

(21) Anmeldenummer: **83102246.2**

(22) Anmeldetag: **08.03.83**

(54) System zum automatischen Aufbau einer Kurzwellen-Telegrafiezeichen-Verbindung.

(30) Priorität: **27.03.82 DE 3211325**

(43) Veröffentlichungstag der Anmeldung:
**05.10.83 Patentblatt 83/40**

(45) Bekanntmachung des Hinweises auf die
Patenterteilung:
**01.10.86 Patenblatt 86/40**

(45) Bekanntmachung des Hinweises auf die
Entscheidung über den Einspruch:
**08.08.90 Patentblatt 90/32**

(84) Benannte Vertragsstaaten:
**FR GB IT**

(56) Entgegenhaltungen:
**DE-A-2 926 093**
**DE-B-2 039 409**
**DE-B-2 042 133**
**DE-B-2 402 562**
**DE-B-2 659 635**

**DEFENSE ELECTRONICS, vol. 12, no. 5, Mai
1980, Palo Alto, Kalifornien, J. BEACH
"Assessing HF Propagation Conditions in Real
Time", Seiten 21,22**

**IEE PROCEEDINGS - F, vol. 127, Teil F, no. 5,
Oktober 1980, London, P.G. FARRELL, R.M.F.
GOODMAN "Soft-decision error control for h.f.
data transmission", Seiten 389-400**

(73) Patentinhaber: **Rohde & Schwarz GmbH & Co.
KG
Mühldorfstrasse 15
D-8000 München 80 (DE)**

(72) Erfinder: **Lange, Wolf Rüdiger
Fladstrasse 8
D-8060 Dachau (DE)**
Erfinder: **Wessel, Anton
Trausnitzstrasse 36
D-8000 München 80 (DE)**
Erfinder: **Greiner, Günter, Dr.
Franziskanerstrasse 19
D-8000 München 80 (DE)**
Erfinder: **Iselt, Peter
Lina-Hänle-Strasse 5
D-8000 München 50 (DE)**
Erfinder: **Böhler, Udo
Bert-Brecht-Allee 5
D-8000 München 82 (DE)**
Erfinder: **Volkheimer, Klaus
Bürgerlingstrasse 15
D-8018 Grafing (DE)**

(74) Vertreter: **Graf, Walter, Dipl.-Ing.
Sckellstrasse 1
D-8000 München 80 (DE)**

(56) Entgegenhaltungen:
**L.WIESNER "Fernschreib- und
Datenübertragung über Kurzwelle", 3.Aufl.1980,
Siemens Aktiengesellschaft , Seite 149 bis 151**

EP 0 090 210 B2

Courier Press, Leamington Spa, England.

**Beschreibung**

Die Erfindung betrifft ein System laut Oberbegriff des Hauptanspruches.

Für den Aufbau einer wechselseitigen Kurzwellen-Verbindung zwischen zwei Sender-Empfänger-Stationen müssen verschiedene Übertragungskriterien berücksichtigt werden, beispielsweise die wechselnden Übertragungseigenschaften der Ionosphäre in Abhängigkeit von der Tageszeit oder von der Sonnenfleckenaktivität, auftretende Fading-Effekte, Störungen durch andere benachbarte Sender und dgl. Im normalen Sprechfunkverkehr oder Telegrafiezeichen-Verkehr werden all diese Kriterien durch speziell ausgebildete Funker berücksichtigt und dieser wählt aufbauend auf seinen Erfahrungen die günstigsten Übertragungskanäle aus. Um diesen nur von geübten Funkern durchführbaren Verbindungsaufbau zu erleichtern, ist es auch bekannt, neben den eigenlichen Sender-Empfänger-Einheiten der beiden Stationen ein zusätzliches relativ aufwendiges Gerätesystem zu verwenden, mit dem feststellbar ist, welcher der Kanäle frei und ungestört von Nachbarsendern ist und wie im Moment gerade die Ausbreitungsbedingungen über die Ionosphäre sind (Frequency Management System nach Defence Electronics, Mai 1980, S. 21 und 22). Bei diesem bekannten System wird mittels eines zusätzlichen Spektrum-Analysators beispielsweise alle fünf Minuten das gesamte zur Verfügung stehende Frequenzband abgesucht und so mittels einer passiven Kanalanalyse geprüft, welche Kanäle in dem Frequenzband gerade frei sind und welche durch Störer belegt sind. Das Ergebnis dieser passiven Kanalanalyse wird auf einem Schirmbild dem Benutzer des Systems graphisch im Frequenzmaßstab dargestellt. Gleichzeitig ist ein zusätzlicher Prüfender (Chirp-Sender) vorgesehen, der beispielsweise ebenfalls alle fünf Minuten ein breitbandiges Sendersignal aussendet. Über einen bei der Gegenstation aufgestellten zugehörigen Prüfempfänger (Chirp-Empfänger) wird ständig das gesamte Frequenzband abgesucht und durch das Zussamenwirken zwischen diesem gesonderten Prüfsender und Prüfempfänger auf den beiden Stationen wird festgestellt, wie momentan die Ausbreitungsbedingungen über die Ionosphäre bei den einzelnen Frequenzen des Gesamtfrequenzbandes sind und bei welchen Frequenzen die beste Übertragung mit dem größtmöglichen Empfangspegel möglich ist. Auch dieses Ergebnis wird dem Benutzer auf einem weiteren Schirmbild im Frequenzmaßstad graphisch angezeigt (aktive Kanalanalyse). Der Funker kann von dem einen Schirmbild einen freien Kanal auswählen und über das andere Schirmbild feststellen, welcher freie Kanal die besten Übertragungseigenschaften (Empfangspegel) besitzt und kann dann darauf den für ihn günstigsten Kanal bestimmen und darauf seine gewünschte Nachrichtenverbindung aufbauen. Dieses bekannte System ist relativ kompliziert und aufwendig und erfordert neben den eigentlichen Geräten zur Nachrichtenübertragung noch die Zusatzgeräte für die aktive und passive Kanalanalyse. Bei dem bekannten System muß außerdem nach wie vor die letzte Entscheidung, welcher Kanal nun tatsächlich benutzt werden soll, vom Funker durch Auswertung der Schirmbilddarstellungen treffen, ein vollautomatischer Aufbau einer Kurzwellenverbindung ist mit dem bekannten System nicht möglich.

Es ist an sich schon ein System zum automatischen Auffinden von geeigneten Kanälen für eine Kurzwellenverbindung bekannt, bei dem zum Aufbau der Verbindung der Sender der Rufstation in einer festgelegten Reihenfolge nacheinander auf jedem der möglichen Kanäle ein Gleichaufsignal und danach in der gleichen Reihenfolge ein Prüfsignal aussendet. Der Empfänger der gerufenen Station sucht im Ruhezustand in der gleichen Reihenfolge zyklisch die Kanäle ab und wenn er ein Gleichaufsignal der Rufstation erkennt, wird ab diesem Zeitpunkt der Empfänger der gerufenen Station auf den Rhythmus des Kanalwechsels der Rufstation synchronisiert (DE—AS 20 39 409, DE—PS 20 42 133 und GB—PS 2 328 595). Damit ist dann bei diesem bekannten System der eigentliche Verbindungsaufbau hergestellt. Anschliessend bewertet der Empfänger der gerufenen Station die vom Sender der Rufstation ausgesendeten Prüfsignale auf jedem einzelnen Kanal und bildet daraus ein entsprechendes Kanalqualitätskriterium (aktive Kanalanalyse auf sämtlichen Kanälen mit vom Sender ausgesendeten Prüfsignalen). Nach dieser Bestimmung der Kanalqualitätswerte im Empfänger wird dem Sender der Rufstation der geeignetste Kanal für den Aufbau einer Verbindung mitgeteilt und dann wird vom Sender der gerufenen Station in umgekehrter Richtung in der festgelegten Reihenfolge der Kanäle eine Information ausgesandt, aus der in der Rufstation der geeignetste Kanal bestimmt wird. Während der dann anschliessenden eigenlichen Nachrichtenübertragung wird im Empfänger aufgrund der empfangenen Daten weiterhin die Kanalqualität aus der Verzerrung und/oder der Fehlerhäufigkeit bestimmt (aktive Kanalanalyse während der Nachrichtenübertragung). Bei Unterschreiten eines bestimmten Verzerrungswertes oder eines bestimmten Fehlerhäufigkeitsgrades wird die Übertragung unterbrochen und ein neuer brauchbarer Kanal nach dem oben erwähnten Prinzip gesucht und ausgewählt. Es ist ferner bekannt, die festgestellten Kanalqualitätswerte in einem Speicher zu speichern und nach der jeweiligen Bewertung sämtlicher Kanäle für die eigentliche Nachrichtenübertragung jeweils den Kanal auszuwählen, der die geringsten Verzerrungen und/oder die geringste Fehlerhäufigkeit besitzt.

Diese bekannte System setzt vor der zyklisch alle Kanäle absuchenden aktiven Kanalanalyse zum Erkennen des bestmöglichen Kanals schon den eigentlichen Verbindungaufbau und Synchronbetrieb von Sender und Empfänger voraus, das bekannte System berücksichtigt also für den eigentlichen Verbindungsaufbau nicht die jeweilige Kanalqualität, diese wird erst für die eigentliche Nachrichtenübertragung bestimmt. Dieses bekannte System ist in dieser Form mit aktiver Kanalanalyse auch nicht zum Aufbau einer Kurzwellenverbindung geeignet, da durch das zyklische Abtasten der

2

einzelnen Kanäle mit gleichzeitiger aktiver Kanalanalyse und Qualitätsbestimmung viel zu viel Zeit vergehen würde und sich zwischenzeitlich die Übertragungsbedingungen schon wieder verändert haben könnten. Dieses bekannte System zum automatischen Auffinden von geeigneten Kanälen für die Nachrichtenübertragung ist in dieser Form für den eigentlichen Aufbau einer Kurzwellenverbindung vor der eigentlichen Nachrichtenübertragung also zu langsam und zu kompliziert. Es würde mit der aktiven Kanalanalyse auch das vorhandene Frequenzband über längere Zeit unnötig belegen und andere in diesem Frequenzband schon vorhandene Verbindungen stören.

Es ist Aufgabe der Erfindung, ein System aufzuzeigen, mit dem bereits der Aufbau einer Kurzwellenverbindung vollautomatisch und schnell ohne unnötige Belegung des zur Verfügung stehenden Frequenzbandes mit Prüfsignalen jeweils auf dem bestmöglichen Kanal durchführbar ist.

Diese Aufgabe wird ausgehend von einem System laut Oberbegriff des Hauptanspruches durch dessen kennzeichnende Merkmale gelöst. Vorteilhafte Weiterbildungen ergeben sich aus den Unteransprüchen.

Bei dem erfindungsgemässen System wird vor dem eigentlichen Verbindungsaufbau, also noch vor dem Aussenden eines Rufsignales durch die Rufstation, allein durch den Empfänger der einzelnen Stationen jeweils durch eine passive Kanalanalyse bestimmt, welcher Kanal im Moment für die Aussendung des Rufsignales der Rufstation qualitätsmässig am besten für einen Verbindungsaufbau ist. Bei dieser passiven Kanalanlayse wird nicht nur festgestellt, ob ein Kanal belegt oder frei ist, wie dies bei dem bekannten eingangs erwähnten System der Fall ist, sondern es werden zusätzlich bei jedem Kanal auch die dort zufällig vorhandenen und empfangenen Telegrafiezeichen, die von anderen fremden oder eigenen Sendern stammen können, auf Zeichenqualität untersucht. Es wird also schon bei dieser passiven Kanalanalyse allein durch die Empfänger der einzelnen Stationen ein objektives Gütekriterium für die einzelnen Kanäle festgestellt, auf denen dann der Verbindungsaufbau durchgeführt werden soll. Bei dieser passiven Kanalanalyse ist es besonders vorteilhaft, auch noch die Übertragungsbedindungen der unmittelbar dem eigentlichen Kanal benachbarten Frequenzen zu bestimmen und im Kanalspeicher abzuspeichern, da hierdurch die tatsächliche Qualität eines Kanals noch wesentlich genauer definiert werden kann. Diese passive Kanalanalyse setzt noch keinen Synchronbetrieb zwischen Sender und Empfänger voraus, sie kann ausschliesslich mit den Empfängern durchgeführt werden. Da für die passive Kanalanalyse die Aussendung spezieller Prüfsignale durch die Rufstation nicht erforderlich ist, wie dies bei den bekannten Systemen mit aktiver Kanalanalyse der Fall ist, wird bei dem erfindungsgemässen System das zur Verfügung stehende Frequenzband auch nicht durch zusätzliche Prüfsignale belegt, was bei der heutigen starken Belegung der Frequenzbänder mit Nachrichtensignalen von grösster Wichtigkeit ist. Beim erfindungsgemässen System wird also schon bei dem Verbindungsaufbau das Ergebnis einer vorhergehenden Kanalanalyse berücksichtigt und so schon für den Verbindungsaufbau ein bestmöglicher Kanal vorausgewählt. Damit kann in kürzester Zeit ein Verbindungsaufbau mit voraussichtlich guter Kanalqualität hergestellt werden und unmittelbar anschliessend wird bei dem erfindungsgemässen System durch Bewertung des Rufsignals die eigentliche Nachrichtenübertragungs eingeleitet, also eine anschliessende zusätzliche Kanalanalyse nach dem Verbindungsaufbau, die das Frequenzband nur unnötig belegen würde und viel Zeit beanspruchen würde, vermieden. Mit dem erfindungsgemässen System kann also sehr schnell eine Kurzwellenverbindung aufgebaut und anschliessend dann sofort eine Nachrichtenübertragung durchgeführt werden, ohne dass hierbei das Frequenzband durch längere Belegung der Kanäle mit Prüfsignalen unnötig belegt wird. Nur wenn auf dem durch die passive Kanalanalyse ausgewählten Kanal keine Verbindung zustandekommt, wird der Verbindungsaufbau auf dem nächstbesten Kanal versucht. Die passive Kanalanalyse wird in der Praxis vor jedem neuen Verbindungsaufbau durchgeführt, auch wenn durch die anschliessende aktive Kanalanalyse während der eigentlichen Nachrichtenübertragung genauere Qualitätswerte für die Kanäle ermittelt und gespeichert werden, da sich bei jedem neuen Verbindungsaufbau diese Werte schon wieder verändert haben können. Die vor dem eigentlichen Verbindungsaufbau vorgesehene passive Kanalanalyse gibt schnell und sicher einen guten Überblick über die momentanen Kanalqualitäten und ist das besten Kriterium für die Kanalauswahl.

Die Bestimmung der tatsächlichen Qualität der Zeichenübertragung kann auf verschiedene Art und Weise durchgeführt werden. Dabei kann diese Qualitätsbestimmung sowohl vor der Demodulation als auch nach der Demodulation durchgeführt werden. Für die Qualitätsbewertung haben sich die sogenannte soft-decision, die Empfangs-Signalstärke und der sogenannte Jitter als besonders vorteilhaft erwiesen. Die Empfangs-Signalstärke kann in bekannter Weise beispielsweise über die Regelspannung vor der Demodulation der empfangenen Signale bestimmt werden. Bei der sogenannten soft-decision wird jedes bit nicht nur darauf untersucht, ob es den Null- oder Einszustand besitzt (hard-decision), sondern bei diesem bekannten Verfahren wird auch noch qualitativ die Fehlerabweichung bestimmt (soft-decision nach IEE Proc. Vol. 127, Pt. F. No 5, October 1980, Seite 389).

Eine andere Möglichkeit der Gütebestimmung des Zeichens besteht darin, in bekannter Weise den Jitter der empfangenen Signale zu bestimmen, also die Schwankungen der Flanken eines Telegrafiezeichens mit der Zeit. Auch dieser sogenannte Jitter ist ein Maß für die Zeichenqualität. Bei dem erfindungsgemäßen System wird bei der passiven Kanalanalyse nicht nur festgestellt, ob ein Kanal belegt oder frei ist, wie dies bei dem bekannten System erfolgt, sondern es werden bei jedem Kanal auch die dort zufällig vorhandenen und empfangenen Telgrafiezeichen, die von anderen fremden oder eigenen Sendern stammen können, auf Zeichenqualität untersucht («soft-decision» oder Jitter oder beides gleichzeitig), wodurch erstmals auch bei der passiven Kanalanalyse ein objektives Gütekriterium für den jeweiligen Kanal festgestellt wird, das erst einen vollautomatischen Verbindungsaufbau ermöglicht.

Das Rufsignal ist vorzugsweise so codiert, daß über eine entsprechende Decodierrichtung im Empfänger unmittelbar aus diesem Rufsignal abgeleitet werden kann, wann das Rufsignal zu Ende ist, also die Gegenstation von Empfang aus Senden des Bestätigungssignals umgeschaltet werden kann. Dies ist dann wichtig, wenn beispielsweise das Rufsignal nur schlecht empfangen wird und beispielsweise das Ende des Rufsignals selbst überhaupt nicht empfangen werden kann. Damit kann im Empfänger automatisch über das empfangene Rufsignal der tatsächliche Zeitpunkt bestimmt werden, zu dem das Bestätigungssignal ausgesendet werden kann und zu dem auch der Empfänger der Rufstation tatsächlich auf Empfang geschaltet ist. Für die Codierung dieses Rufsignals gibt es hierfür wieder die verschiedensten Möglichkeiten. Eine besonders einfache und vorteilhafte Möglichkeit besteht darin, das Rufsignal in einzelne Signalrahmenabschnitte aufzuteilen und in jedem Rahmen neben den gleichen sich ständig wiederholenden Signalteilen wie Synchronwort, Adressen usw. auch noch ein sogenanntes Rahmenzählerwort mit zu übertragen, das unmittelbar kennzeichnend ist für die Lage des jeweiligen Rahmens innerhalb der aufeinanderfolgenden Rahmenreihe. Im Empfänger kann also nach Decodierung des Rufsignals aus den einzelnen Rahmenzählerworten jeweils genau bestimmt werden, wieviel Rahmen noch empfangen werden müssen, bis das Rufsignalende erreicht ist. Wird beispielsweise festgestellt, daß soeben der fünftlezte Rahmen einer Rahmenreihe von beispielsweise zweiunddreißig Rahmen empfangen wurde und wird daraufhin der Empfang der nächstfolgenden vier letzten Rahmen gestört, so kann im Empfänger trotzdem sicher festgestellt werden, daß nach einer Zeit von fünf Rahmen das Rufsignalende erreicht ist und dann beispielsweise nach einer bestimmten Sicherheitszeit das Bestätigungssignal ausgesendet werden kann.

Für einen vollautomatishen Verbindungsaufbau ist es besonders wichtig, daß alle empfangenen Zeichen des Rufsignals auch tatsächlich fehlerfrei ausgewertet werden, insbesondere wenn aus diesen empfangenen Rufsignal-Zeichen über die erwähnten Zeichenrahmen automatisch das Ende des Rufsignals exakt bestimmt werden soll. Gemäß einer Weiterbildung der Erfindung hat es sich daher als vorteilhaft erwiesen, bei der Rahmensynchronisation die tatsächlich ermittelten Zeichenqualitäten zur Verbesserung der Synchronisation sowie der Decodierung der anderen Teile des Rahmens heranzuziehen, also das Ergebnis der Pegel- und Jitter-Auswertung sowie der soft-decision. Zusätzlich wird gemäß der Erfindung eine gewichtete Addition dieser einzelnen Bits durchgeführt, und zwar werden alle gleichen Bits der aufeinanderfolgenden Rahmen in einem Speicher aufaddiert. Das Ergebnis ist eine wesentliche Verbesserung der Zeichenerkennung. Dieses Verfahren kann nicht nur bei den stets gleichbleibenden Bits der einzelnen aufeinanderfolgenden Rahmen, beispielsweise bei dem Sychronwort, Adressenwort oder dgl. angewendet werden, sondern bei entsprechend spezieller Codierung des Rahmenzählerwortes auch bei dieser sich in aufeinanderfolgenden Rahmen ständig ändernden Bitfolge.

Bei der Qualitätsbestimmung der tatsächlichen Zeichenübertragung bei der passiven Kanalanalyse durch soft-decision bzw. durch Jitter, was hier ja nur bei fremden an sich störenden Signalen, auf dem jeweiligen Kanal erfolgen kann, bedeutet ein großer Jitter eines zufällig im Kanal empfangenen Signals, daß dieser Kanal für einen Verbindungsaufbau geeignet ist, da das fremde Signal in dem Kanal ja nur mit schlechter Qualität empfangen wird. Ähnliches gilt für die «soft-decision» auch hier wird bei Feststellung von qualitativ schlechten Zeichen erkannt, daß dieser Kanal für eine Übertragung geeignet ist. Bei der aktiven und passiven Analyse kann neben der Festytellung der Zeichenqualität nach der Demodulation in an sich bekannter Weise natürlich zusätzlich auch noch der Empfangspegel vor der Demodulation entsprechend mitberücksichtigt werden und hieraus auf die Kanalqualität geschlossen werden.

Gemäß der Erfindung wird erstmals ein System aufgezeigt, mit dem vollautomatisch ohne Hinzutun einer Bedienungsperson eine Kurzwellen-Telegrafiezeichen- oder sonstige Datenübertragungs-Verbindung durchgeführt werden kann, wobei noch dazu der Systemaufwand extrem niedrig gehalten wird.

Die Erfindung wird im folgenden anhand schematischer Zeichnungen an Ausführungsbeispielen näher erläutert.

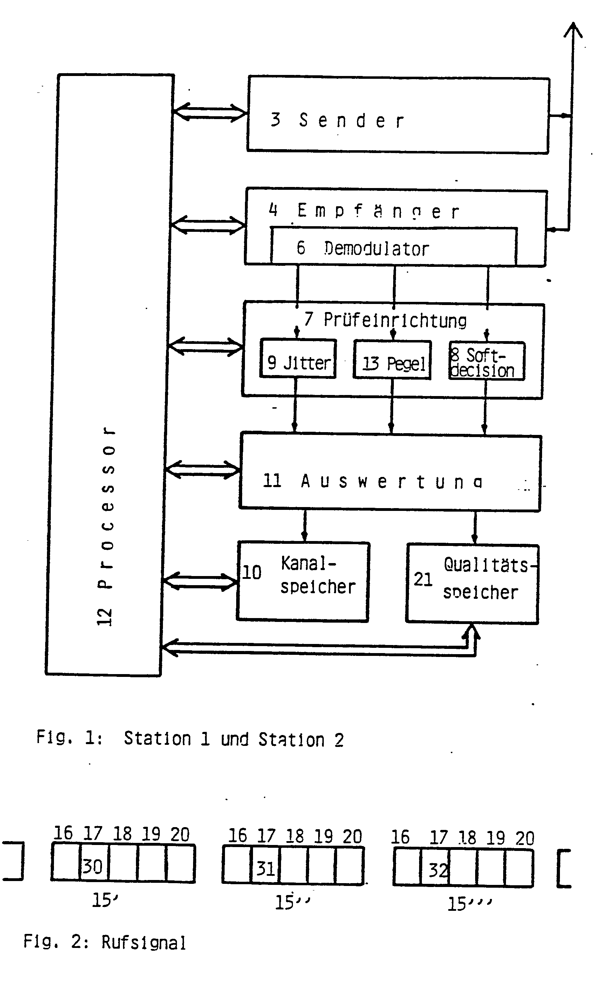

Fig. 1 zeigt das Prinzipschaltbild eines erfindungsgemäßen Systems. Jede der beiden Stationen 1 und 2 besteht aus einem auf verschiedene Kanäle eines breiten Frequenzbandes abstimmbaren Sender 3 und einem Empfänger 4, der ebenfalls auf ausgewählte Kanäle eines breiten Frequenzbandes abstimmbar ist und der außerdem noch in diesem gesamten Frequenzband einen Suchlauf durchführen kann. Sender und Empfänger sind auf eine gemeinsame Antenne 5 geschaltet. Der Ausgang des Empfänger-Demodulators 6 ist mit einer Prüfeinrichtung 7 zum Feststellen der tatsächlichen Qualität der empfangenen Telegrafiezeichen verbunden, diese Prüfeinrichtung 7 besteht beispielsweise aus einem bekannten sogenannten soft-decision-Demodulator 8 einem bekannten sogenannten Jitter-Decoder 9 und einer Pegelmesseinrichtung 13. Mit dem Demodulator 8 wird beispielsweise für jedes empfangene Zeichen pro Bit eine Entscheidung darüber getroffen, ob dieses Bit «High» oder «Low», «−1» oder «+1», «mark» oder «space» bzw. «Zeichenschritt» oder «Trennschritt» ist und gleichzeitig wird am Ausgang des Demodulators 8 eine Information über die jeweilige Qualität bzw. Zuverlässigkeit dieser Ja-Nein-Entscheidung ausgegeben. Auch der Decoder 9 gibt eine Information über die Qualität der empfangenen Zeichen aus und zwar darüber, wie stark die empfangenen Telegrfiezeichen verzerrt sind, d.h. wie stark ihre Flanken schwanken (Jitter). Die so aus 8, 9 und 13 gewonnenen Informationen über die tatsächliche Qualität der empfangenen Zeichen werden in einem Kanalspeicher 10 abgespeichert. Der Empfängerausgang ist über die Prüfeinrichtung 7 mit einer Auswerteinrichtung 11 verbunden. Diese einzelnen Geräte jeder Sation werden über eine zentrale Steuereinrichtung 12 gesteuert und durch entsprechende Programmierung dieser Steuereinrichtung 12 ist ein nachfolgend näher beschriebener Betrieb dieser Stationen möglich.

Vor Beginn des Ausbaus einer Verbindung zwischen den beiden Stationen 1 und 2 führt zunächst jeder Empfänger 4 einen Suchlauf im gesamten Frequenzband durch und führt dabei eine passive Kanalanalyse durch. Hierbi wird für jeden einzelnen Kanal einerseits über eine Pegelmeßeinrichtung 13 die Größe des jeweils auf diesem Kanal empfangenen Hochfrequenz-Pegels gemessen, also der Pegel eines auf diesem Kanal gerade zufällig empfangenen fremden oder eigenen Senders oder gegebenenfalls auch nur Rauschen. Gleichzeitig wird über die Decoder 8 und 9 das demodulierte Ausgangssignal solcher pro Kanal zufällig empfangener Telegrafiezeichen bezüglich dessen Empfangsqualität ausgewertet. Auf diese Weise wird für jeden Kanal die momentane Übertragungsqualität festgestellt und die so gewonnenen Werte werden für jeden einzelnen Kanal im Kanalspeicher 10 abgespeichert und nach ihrer Güte sortiert. Nach Abschluß dieser passiven Kanalanalyse sind also im Kanalspeicher 10 die tatsächlichen Kanalqualitätswerte nach ihrer Güte gestaffelt sowie in einer Tabelle gespeichert.

Soll nun beispielsweise von der Station 1 zur Station 2 eine Nachricht übertragen werden und ein Sende/Empfangs-Betrieb zwischen den Stationen aufgebaut werden, so wird beispeilsweise durch einen in die Steuereinrichtung 12 eingegebenen entsprechenden Startbefehl der Sender 3 auf denjenigen Kanal automatisch abgestimmt, der im Speicher 10 an erster Stelle also mit bester Qualität abgespeichert ist. Der Sender 3 sendet dann eine vorbestimmte Zeit lang ein Rufsignal aus, das vom Empfänger 4 der Gegenstation 2, der ständig einen Suchlauf auf sämtlichen Kanälen ausführt, möglicherweise empfangen wird. Das Rufsignal besteht aus mehreren aufeinanderfolgenden nachfolgend näher beschriebenen Signal-Rahmenabschnitten, die jeweils ein Synchronwort enthalten und aus denen ferner das Ende des Rufsignals im Empfänger feststellbar ist. Empfängt nun der Empfänger 4 der Gegenstation 2 tatsächlich auf dem vom Sender 3 der Station 1 ausgewählten Kanal das Rufsignal, so wird über die Auswerteinrichtung 11 der Gegenstation das Ende dieses Rufsignales bestimmt. Am ende des Rufsignals oder eine vorbestimmte Zeit danach wird automatisch der Sender 3 der Gegenstation auf diesen Kanal abgestimmt und dieser Sender sendet ein bestimmtes Bestätigungssignal aus. Der Empfänger 4 der Rustation 1 ist nach Ende des Rufsignals automatisch auf dem ausgewählten Kanal auf Empfang geschaltet worden und kann somit das Bestätigungssignal empfangen. Wird auch das Bestätigungssignal mit ausreichender Qualität in der Station 1 empfangen, kann der übliche Sende/Empfangs-Betrieb zwischen den Stationen 1 und 2 in bekannter Weise aufgenommen werden.

Hat der Empfänger 4 der Gegenstation 2 während des ersten Suchvorganges, also bei Betrieb des Senders 3 der Rufstation 1 auf dem als ersten abgespeicherten Kanal dieses Rufsignal nicht empfangen, weil beispielsweise auf dieser Kanalfrequenz im Moment schlechte Übertragungsbedingungen zwischen den Stationen 1 und 2 bestehen, so empfängt die Rufstation 1 am Ende des Rufsignales auch kein Bestätigungssignal. Der Sender 3 der Rustation 1 wird dann automatisch auf den im Speicher 10 gespeicherten nächstbesten Kanal umgeschaltet und versucht dann erneut mit der Gegenstation 2 in Kontakt zu kommen. Wird auch auf diesem Kanal keine Verbindung hergestellt, so wird der Sender 3 auf den im Speicher 10 gespeicherten drittbesten Kanal umgeschaltet usw., bis schließlich das Bestätigungssignal empfangen wird.

Ist auf diese Weise eine Nachrichtenverbindung aufgebaut, so wird eine aktive Kanalanalyse auf dem ausgewählten Kanal durchgeführt, d.h. es werden wiederum in jedem Empfänger jeweils die tatsächlichen Empfangspegelwerte zusammen mit den über die Decoder 8 und 9 gewonnenen Werte über die Qualität der empfangenen Telegrafiezeichen für diesen Kanal im Speicher 10 abgespeichert, und zwar vorzugsweise zusammen mit der Uhrzeit und der Position der Gegenstelle für zukünftige Prognosen. Auf diese Weise werden die hier gespeicherten Qualitätswerte der passiven Kanalanalyse korrigiert und erganzt. Damit kann über einen längeren Zeitraum durch Aufbau mehrerer verschiedener Verbindungen zwischen den Stationen auf verschiedenen Kanälen durch diese aktive Kanalanalyse das Ergebnis über die sortierte Qualität der einzelnen Kanäle nach und nach verbessert werden, so daß für jeden neuen Rufvorgang jede der Stationen immer bessere Ergebnisse über die jeweils gerade günstigsten Kanäle zur Verfügung hat. Auf diese Weise kann eine Nachrichtenverbindung zwischen zwei Stationen vollautomatisch aufgebaut werden und zwar auf dem jeweils günstigsten Kanal.

Bei einem System dieser Art ist es wichtig, daß auch unter schlechten Übertragungsbedinungen stets mit Sicherheit das jeweilige Ende des Rufsignals feststeht, also die beiden Stationen schnell und sicher synchronisiert werden. Aus diesem Grunde wird ein spezielles Rufsignal gemäß Fig. 2 verwendet, Fig. 2 zeigt das Ende eines aus mehreren aufeinanderfolgenden Signalrahmen 15 zusammengesetzten Rufsignals. Fig. 2 zeigt die drei letzten Rahmen 15 eines solchen beispielsweise aus ingesamt zweiunddreißig Rahmen zusammengesetzten Rufsignals. Die Länge des Rufsignals richtet sich nach der Zeit, die der Empfanger 4 der Gegenstation für einen vollständigen Suchlauf benötigt, damit sichergestellt ist, daß pro Suchlauf der Empfänger 4 auch tatsächlich alle Kanäle absuchen und auch den Empfang eines Rufsignals bestätigen kann. Jeder Rahmen 15 besteht aus einem aus mehreren Bits bestehenden Synchronwort 16, einem anschließenden sogenannten Rahmenzählerwort 17, einer Empfängeradresse 18, einer Absenderadresse 19 und einem sogenannten Statuswort 20. Die Bit-Worte 16, 18, 19 und 20 sind in jedem Rahmen 15 gleich, die Rahmenzählerworte 17 unterschieden sich in aufeinanderfolgenden Rahmen.

# EP 0 090 210 B2

Das Rahmenzählerwort 17 gibt an, an welcher Stelle der Rahmenreihe sich der jeweilige Rahmen 15 innerhalb des Rufsignals befindet, in dem Ausführungsbeispiel nach Fig. 2 ist bei einem aus zweiunddreißig Rahmen 15 bestehenden Rufsignal das Rahmenzählerwort 17 des letzten Rahmens beispielsweise «0», das vorhergehende «1» usw.

In der Auswerteinrichtung 11 kann durch eine Korrelationsverfahren das Synchronwort 16 eines empfangenen Rufsignals geprüft werden und es wird auf diese Weise eine Rahmensynchronisation erreicht. Nach dieser Rahmensynchronisation können dann auch die anderen Worte des Rahmens ausgewertet werden, beispielsweise auch die Rahmenzählerworte 17. Wird auf diese Weise beispielsweise der drittletzte Rahmen 15 ausgewertet und dabei festgestellt, daß im Moment der Rahmen «2» empfangen wird, so kann in der Auswerteinrichtung 11 automatisch bestimmt werden, daß nach zwei weiteren Rahman «1» und «0» das Ende des Rufzeichens erreicht ist und daß dann der Empfänger der Rufstation auf Empfang geschaltet wird und damit auch vom eigenen Sender das Bestätigungssignal ausgesendet werden kann. Wenn einmal eine Rahmensynchronisation erreicht ist und der tatsächliche Rahmen identifiziert ist, kann also das Rufsignal ohne weiteres gestört sein, es wird trotzdem immer exakt die Gesamtsynchronisation zwischen den Stationen aufgebaut werden können.

Bei Kurzwellenverbindungen sind die aufeinanderfolgenden Bits oftmals sehr stark gestört, einige Sekunden später ist die Verbindung oftmals aber wieder wesentlich besser, beispielsweise durch Schwunderschienungen oder dgl. Hierdurch könnte die Synchronisation sehr verzögert oder überhaupt unmöglich gemacht werden. Nach einer Weiterbildung der Erfindung wird daher durch zusätzliche Maßnahmen die Wahrscheinlichkeit für eine fehlerfreie Erkennung der empfangenen Rufsignale verbessert. Dazu werden bei der Auswertung des Rufsignals zusätzlich zu den in der Prüfeinrichtung 7 gewonnenen Information über die Qualität des momentanen Bits, nämlich den Informationen des Pegels und des Jitters, noch die Informationen der «soft-decision» ausgewertet. Gemäss einer besonders vorteilhaften Weiterbildung der Erfindung werden hierbei aber nicht nur diese Informationen berücksichtigt, sondern es wird durch einen gesonderten gewichteten Additionsvorgang die Wahrscheinlichkeit einer fehlerfreien Zeichenerkennung noch weiter verbessert. Aus diesem Grunde ist der Demodulator 8 noch mit einem zusätzlichen Speicher 21 verbunden, in welchem die gewichteten Bit-Wertes von jeweils gleichen empfangenen Bits aufaddiert werden.

Dabei wird jedes Bit nicht einfach als «−1» oder «+1» bewertet, sondern als eine bestimmte negative Zahl oder positive Zahl. Das Vorzeichen jeder Zahl ist der eigentliche Nachrichteninhalt wie bei einer «harten» Entscheidung, der Betrag der Zahl ist eine Maß für die Qualität. Angenommen, durch den Demodulator 8 wird für die drei letzten in Fig. 2 dargestellten Rahmen 15′, 15″ und 15‴ das beispielsweise aus vier einzelnen Bits bestehende Synchronwort 16 mit folgenden Werten bestimmt:

| Synchronwortrahmen 15′ | +120, +2, −30, −30 |
| Synchronwortrahmen 15″ | +30, −30, +30, −30 |
| Synchronwortrahmen 15‴ | +10, +1, +10, −30 |
| Richtiges Sychronwort: | +, −, +, − |

Daraus ergibt sich, daß jeweils das zweite und dritte Bit des Synchronwortes gestört ist. Eine einfache Mehrheitskombination würde nur die Bit-Folge +, +, +, −, ergeben, was falsch wäre. Durch Aufaddition der nacheinander aufgefundenen Werte ergibt sich jedoch

$$+60, -27, +10, -90$$

Daraus kann dann die richtige Nachricht erkannt werden. Auf diese Weise kann durch gewichtete Addition der aufeinanderfolgenden Werte in den Speicher 21 die Wahrscheinlichkeit einer richtigen Zeichenerkennung wesentlich verbessert werden.

Diese gewichtete Addition ist natürlich nur für jeweils aufeinanderfolgende gleiche Zeichenabschnitte anwendbar, also beispielsweise für das Synchronisierwort 16 und die anderen ebenfalls gleichen Rahmenabschnitte 18, 19 und 20. Durch geeignete Maßnahmen kann jedoch auch für die in aufeinanderfolgenden Rahmen nichtgleichen Zeichenabschnitte, beispielsweise das Rahmenzählerwort 17, diese gewichtete Addition zur Zeichenverbesserung angewendet werden, wenn durch eine geeignete Codierung dieser Zeichenabschnitte dafür gesorgt wird, daß sie leicht gleich gemacht werden können. Es ist lediglich erforderlich, für solche unterschiedliche Zeichenworte einen Code zu wählen, der es erlaubt, aus einem gegebenen beliebigen Zählerstand den inkrementierten oder dekrementierten Zählerstand zu bestimmen, ohne daß der tatsächliche Wert des Zählerstandes bekannt sein muß. Ein einfaches Beispiel ist der sogenannte Verschiebecode mit folgenden Eigenschaften:

| 4 | 0 | 0 | 0 | 0 | 1 |
| 3 | 0 | 0 | 0 | 1 | 0 |
| 2 | 0 | 0 | 1 | 0 | 0 |
| 1 | 0 | 1 | 0 | 0 | 0 |
| 0 | 1 | 0 | 0 | 0 | 0 |

Aus diesem Code ergibt sich, daß die aufeinanderfolgenden binären Zahlen nur um eine Stelle erhöht oder ernierdrigt werden müssen, um Gleichzeit mit der vorhergehenden oder nächstfolgenden Zahl zu erreichen. Sind die Rahmenzählerworte 17 nach einem solchen Verschiebecode codiert, so kann durch Anwendung dieses Prinzips in aufeinanderfolgenden Rahmen jeweils Bit-Gleichheit hergestellt werden und es kann dann wieder die obenerwähnte gewichtete Addition zur Zeichenerkennungsverbesserung angewendet werden. Dazu ist es nur erforderlich, in dem auswertenden Prozessor einen zweiten Speicher 21 vorzusehen, wobei jeweils die nähstfolgenden Rahmenzählerworte um eins vorschoben in diesen Speicher eingegeben werden und die einzelnen Werte in den Speicherplätzen aufaddiert werden. Auf diese Weise können also im ersten Speicher die Bit-Worte jedes Rahmens, die von Anfang an gleich sind, und im zweiten Speicher die entsprechend gleichgemachten, ursprünglich jedoch unterschiedlichen Bit-Worte gewichtet addiert werden und es ist auf diese Weise möglich, den Gesamtinhalt der Rahmen durch gewichtete Addition bezüglich Zeichenerkennung wesentlich zu verbessern.

Die bei diesem Gleichmachen der Rahmenzählerworte nötige Anzahl der Verschiebung von Worten ist unmittelbar gleichbedeutend mit der Zahl der empfangenen Rahmen.

**Patentansprüche**

1. System zum Aufbau einer Kurzwellen-Telegraphiezeichen-Verbindung zwischen zwei Sender-Empfänger-Stationen innerhalb eines in mehrere Kanäle aufgeteilten Frequenzbandes, bei dem der Sender der die Verbindung wünschenden Station ein Rufsignal sendet, bis der alle Känale fortlaufend absuchende Empfänger der Gegenstation dieses Rufsignal empfängt und seinerseits nach Ende des Rufsignales über seinen Sender auf diesem Kanal ein Bestätigungssignal an dem zwischenzeitlich auf Empfang umgeschalteten Empfänger der Rufstation sendet, wobei vor der eigentlichen Nachrichtenübertragung durch eine erste Kanalanalyse und anschließend auch während der Nachrichtenübertragung durch eine weitere aktive Kanalanalyse der von der Gegenstation im jeweils benutzten Kanal empfangenen Telegraphiezeichen die Qualität der Zeichenübertragung bestimmt wird und die bei der ersten Kanalanalyse gewonnenen Kanalqualitätswerte nach ihrer Güte sortiert in einem Kanalspeicher gespeichert werden, dadurch gekennzeichnet, daß die erste Kanalanalyse vor dem eigentlichen Verbindungsaufbau nur mittels der Empfänger der Stationen als passive Kanalanalyse allein mit den in den Kanälen zufällig empfangenen Signalen durchgeführt wird, ohne daß von der Gegenstation zur Kanalanalyse gezielt Telegraphiezeichen ausgesendet werden, und hierbei neben dem Pegel mindestens auch noch der Jitter der empfangenen Signale ausgewertet wird und die durch diese passive Kanalanalyse ermitteln und im Kanalspeicher gespeicherten Kanalqualitätswerte durch die anschließende aktive Kanalanalyse während der Nachrichtenübertragung korrigiert und ergänzt werden und daß für den Verbindungsaufbau der Sender der Rufstation zunächst auf denjenigen Kanal abgestimmt wird, der im Kanalspeicher dieser Station mit den besten Kanalqualitätswerten gespeichert ist, und nach einer vorbestimmten Zeit die Rufstation auf Empfang schaltet und bei Empfang des Bestätigungssignales der Gegenstation automatisch der Nachrichten-Übertragungsbetrieb auf diesem Kanal aufgenommen wird, während dann, wenn nach dieser vorbestimmten Zeit kein Bestätigungssignal empfangen wird, der Sender der Rufstation automatisch auf denjenigen Kanal umgeschaltet wird, der im Kanalspeicher mit den nächstbesten Kanalqualitätswerten gespeichert ist.

2. System nach Anspruch 1, dadurch gekennzeichnet, dass zur Bestimmung der tatsächlichen Zeichenqualität zusätzlich ein bekannter «soft-decision»-Demodulator benutzt wird.

3. System nach Anspruch 1 oder 2, dadurch gekennzeichnet, dass bei der Bestimmung der tatsächlichen Zeichenqualität zusätzlich noch die Fehlerrate der empfangenen Signale bestimmt wird.

4. System nach einem der vorhergehenden Ansprüche, dadurch gekennzeichnet, daß bei der passiven Kanalanalyse auch noch die Übertragungsbedingungen der unmittelbar den jeweiligen Kanälen benachbarten Frequenzen bestimmt und gespeichert werden.

5. System nach einem der vorhergehenden Ansprüche, dadurch gekennzeichnet, daß das Rufsignal so codiert ist, daß über eine im Empfänger vorgesehene Decodiereinrichtung aus ihm unmittelbar das Rufsignalende bestimmbar ist, und daß diese Decodiereinrichtung nach dem Rufsignal den zugehörigen Sender automatisch auf Aussendung des Bestätigungsignals umschaltet.

6. System nach Anspruch 5, dadurch gekennzeichnet, daß das Rufsignal aus einer Reihe von aufeinanderfolgenden gleichen Signalrahmen besteht, wobei jeder Rahmen mindestens aus einem Synchronwort und einem die Lage des jeweiligen Rahmens innerhalb der Rahmenreihe anzeigenden Rahmenzählerwort besteht, und daß in der Decodiereinrichtung über die Auswertung der empfangenen Rahmenzählerworte das Rufsignalende bestimmt wird.

7. System nach Anspruch 6, dadurch gekennzeichnet, daß jeder Signalrahmen neben dem Synchronwort und dem Rahmenzählerwort noch weitere informationen über Adresse des Empfängers und/oder Adresse des Senders und/oder mindestens teilweise über des Ergebnis der aktiven bzw. passiven Kanalanalyse enthält.

8. System nach einem der vorhergehenden Ansprüche, dadurch gekennzeichnet, daß das Bestätigungssignal die sortierten Kanalqualitätswerte des Kanalspeichers der Gegenstation enthält.

9. System nach einem der vorhergehenden Ansprüche, dadurch gekennzeichnet, daß nach Aufnahme des Nachrichten-Sende/Empfangs-Betriebes die nach ihrer Güte sortierten Kanalqualitätswerte der Kanalspeicher beider Stationen miteinander ausgetauscht werden und daraus eine für beide Stationen optimale Reihenfolge der Güte der Kanalqualitätswerte errechnet und in den beiden Kanalspeichern abgespeichert wird.

10. System nach Anspruch 6 bis 9, dadurch gekennzeichnet, dass bei Empfang des Rufsignals im Empfänger der Gegenstation durch ein bekanntes Korrelationsverfahren aus den empfangenen Rahmen das dort enthaltene Synchronwort bestimmt wird und damit die Auswerteinrichtung des Empfängers auf die Rahmen synchronisiert wird.

11. System nach Anspruch 10, dadurch gekennzeichnet, dass bei der Rahmensynchronisation die tatsächlich ermittelten Zeichenqualitäten zur Verbesserung der Synchronisation sowie der Dekodierung der anderen Teile des Rahmens herangezogen werden.

12. System nach Anspruch 11, dadurch gekennzeichnet, dass die tatsächlich ermittelten Zeichenqualitäten einem Prozessor zugeführt werden, in welchem zur Verbesserung der Zuverlässigkeit der Zeichenerkennung die festgestellten Werte der aufeinanderfolgenden gleichen Zeichen (Synchronwort, Adressenwort) die einzelnen Rahmen des Rufsignals gewichtet nach ihrer resultierenden Qualität aufaddiert werden und diese so gewonnene verbesserte Zeichenfolgende zur Rahmensynchronisation ausgewertet wird.

13. System nach Anspruch 6 bis 12, dadurch gekennzeichnet, dass der Code des Rahmenzählerwortes innerhalb jedes Rahmens des Rufsignales so gewählt ist, dass aus jedem beliebigen, auch nicht bekannten Rahmenzählerwort das vorhergehende oder nächstfolgende Rahmenzählerwort bestimmbar ist, dass ferner in dem die gewichtete Addition der Zeichen durchführenden Prozessor die aufeinanderfolgenden unterschiedlichen Rahmenzählerworte der Rahmen durch entsprechende Inkrementierung oder Dekrementierung oder Verschiebung gleichgemacht werden und aus diesen Rahmenzählerworten durch gewichtet Aktion eine verbesserte Zeichenfolge gewonnen wird, die zur Synchronisation ausgewertet wird.

**Revendications**

1. Système pour établir une liaison de signe télégraphiques en ondes courtes entre deux postes-émetteurs-récepteurs dans une bande de fréquences partagées entre plusieurs canaux, l'émetter recevant un signal d'appel du poste souhaitant établir la liaison, jusqu'à ce que le récepteur du poste opposé et qui recherche en continu tous les canaux, ait reçu ce signal d'appel et que de son côté à la fin du signal d'appel, il envoie par son émetteur et sur ce canal un signal de confirmation ver le récepteur du poste d'appel qui entre temps a commuté sur le mode réception et avant la transmission proprement dite des informations, à l'aide d'une première analyse de canal, puis également pendant la transmission des informations à l'aide d'une autre analyse de canal active des signaux télégraphiques reçus par le poste opposé dans chacun des canaux utilisés, on détermine la qualité de la transmission des signaux et on stocke dans une mémoire de canaux les valeurs de la qualité des canaux obtenues lors de la première analyse de canal, classées en fonction de leur qualité, système caractérisé en ce que la première analyse de canaux est faite avant l'établissement proprement dit de la liaison uniquement par l'intermédiaire des récepteurs des postes et sous la forme d'une analyse de canaux passive, avec les seuls signaux reçus accidentellement dans les canaux, sans que des signaux télégraphiques soient émis par le poste opposé dans le but d'effectuer une analyse de canaux et en plus du niveau, on exploite également le scintillement des signaux reçus et les grandeurs de qualité de canaux déterminées par cette analyse passive des canaux et enregistrées dans la mémoire de canaux pour corriger et compléter ces grandeurs par l'analyse active consécutive des canaux au cours de la transmission des informations, et en ce que pour l'établissement de la liaison, l'émetteur du poste appelant est tout d'abord accordé sur le canal qui est enregistré dans la mémoire de canal de ce poste avec les meilleures grandeurs de qualité de canal et aprés un temps prédétermine, le poste appelant commute en réception et à la réception du signal de confirmation du poste opposé, la fonctionnement en transmission d'informations est pris automatiquement par ce canal alors que si après ce temps prédéterminé aucun signal de confirmation n'est reçu, l'émetteur du poste appelant commute automatiquement sur celui des canaux qui est enregistré dans la mémoire de canaux avec le résultat de qualité directement en-dessous.

2. Système selon la revendication 1, caractérisé en ce que pour déterminer la qualité réelle des signes, on utilise en outre un démodulateur de décision de programme, connu.

3. Système selon la revendication 1 ou la revendication 2, caractérisé en ce que pour déterminer la

EP 0 090 210 B2

qualité réelle des signes, on détermine en outre également le taux des erreurs des signaux reçus.

4. Système selon l'une quelconque des revendications précédentes, caractérisé en ce que pour une analyse passive des canaux, on détermine et on met en mémoire les conditions de transmissions des fréquences voisines des différents canaux.

5. Système selon l'une des revendications précédentes, caractérisé en ce que le signal d'appel est codé de façon qu'un dispositif de décodage prévu dans le récepteur puisse déterminer à partir de ce signal directement la fin du signal d'appel et en ce qu'après le signal d'appel le dispositif de décodage commute automatiquement l'émetteur correspondant pour qu'il émette le signal de confirmation.

6. Système selon la revendication 5, caractérisé en ce que le signal d'appel se compose d'une succession de cadres de signal, identiques et chaque cadre de compose d'au moins un mot de synchronisation et d'un mot de comptage de cadre indiquant la position du cadre correspondant dans la série des cadres et en ce que le dispositif de décodage détermine la fin du signal d'appel par l'exploitation des mots de comptage de cadres reçus.

7. Système selon la revendication 6, caractérisé en ce que chaque cadre de signal comporte en plus du mot de synchronisation et du mot de comptage de cadre d'autres informations relatives à l'adresse du récepteur et/ou l'adresse de l'émetteur et/ou au moins partiellement la résultat de l'analyse active ou passive du canal.

8. Système selon l'une des revendications précédentes, caractérisé en ce que le signal de confirmation contient les grandeurs de qualité de canal classées de la mémoire de canal du poste opposé.

9. Système selon l'une des revendications précédentes, caractérisé en ce qu'après mise en oeuvre du fonctionnement émission/réception d'informations, on échange les grandeurs de qualité de canal classées suivant leur qualité des mémoires de canal des deux postes et à partir de là on calcule une suite optimale des qualités des grandeurs de qualité de canal des deux postes et on le enregistre dans les deux mémoires de canal.

10. Système selon les revendications 6 à 9, caractérisé en ce qu'à la réception du signal d'appel dans le récepteur du poste opposé, en utilisant un procédé de corrélation connu, partant des cadres reçus, on détermine le mot de synchronisation qui y est contenu et on synchronise ainsi le dispositif d'exploitation du récepteur sur les cadres.

11. Système selon la revendication 10, caractérisé en ce que pour les synchronisation des cadres, on utilise les qualités de signes réellement déterminées pour améliorer la synchronisation ainsi que le décodage des autres parties du cadre.

12. Système selon la revendication 11, caractérisé en ce qu'on fournit les qualités de signes réellement déterminées à un procédé dans lequel pour améliorer la fiabilité de la reconnaissance des signes, on additionne les grandeurs déterminées des signes identiques successifs (mot de synchronisation, mot d'addresses) des différents cadres du signal d'appel avec pondération, suivant leur qualité résultante et on exploite la suite améliorée de signes ainsi obtenus pour la synchronisation des cadres.

13. Système selon la revendications 6 à 12, caractérisé en ce que le code du mot de comptage de cadre dans chaque cadre du signal d'appel est choisi de manière qu'à partir d'un mot de comptage de cadre quelconque mais non connu, on puisse déterminer le mot de comptage de cadre précédent ou suivant, en ce qu'en outre le processeur qui effectue l'addition pondérée des signes rend identiques les mots de comptage de cadres différents dans leur suite par incrémentation ou décrémentation correspondante ou décalage et à partir de ces mots de comptage de cadres, par une action pondérée, il fournit une suite améliorée de signes exploités pour la synchronisation.

**Claims**

1. A system for the initiation of a trunking scheme of short-wave telegraph signals between two transmitter-receiver stations within a frequency band divided into a plurality of channels, in which the transmitter of the station that desires communication transmits a ringing signal until the receiver of the opposite station, which continuously searches all channels, receives said ringing signal and in its turn, after termination of the ringing signal, transmits via its transmitter on said channel an acknowledge signal of the receiver of the calling station which has in the meantime switched to the receiving mode, wherein the quality of the signal transmission in the channels is respectively determined prior to the actual message transmission by a first channel analysis and subsequently also during message transmission by a further active channel analysis of the telegraph signals received from the opposite station in the used channel and the channel quality value obtained by the first channel analysis are stored in a channel memory in quality-sorted condition, characterized in that said first channel analysis prior to the actual establishment of the connection is performed as passive channel analysis solely with the signals randomly received in the channels without sending selective telegraph signals from the opposite station for channel analysis, in which an addition to the level at least also the jitter of the received signals is evaluated and the channel quality values determined by said passive channel analysis and stored in the channel memory are corrected and supplemented by the subsequent active channel analysis during message transmission, and that for establishing the connection the transmitter of the calling station is initially tuned to the channel that is stored in the channel memory of said station as having the best channel quality values and after a predetermined period of time the calling station switches to the receiving mode and upon receipt of the

9

acknowledge signal from the opposite station the message transmitting operation on said channel is automatically started, whereas if no acknowledge signal is received after said predetermined period of time, the transmitter of the calling station is automatically switched to the channel that is stored in the channel memory as having the second-best channel quality values.

2. A system as claimed in claim 1, characterised in that a conventional «soft-decision» demodulator is additionally used for determining the actual signal quality.

3. A system as claimed in claim 1 or claim 2, characterised in that the error rate of the received signals is additionally determined when the actual signal quality is determined.

4. A system as claimed in any one of the preceding claims, characterised in that during passive-channel analysis also the transmitting conditions of the frequencies directly adjacent the respective channels are determined and stored.

5. A system as claimed in any one of the preceding claims, characterised in that the ringing signal is encoded such that the termination of the ringing signal can be directly determined therefrom by decoding means provided in the receiver, and that, following said ringing signal, said decoding means automatically switches the associated transmitter to transmitting the acknowledge signal.

6. A system as claimed in claim 5, characterised in that the ringing signal is composed of a series of successive identical signal frames, in which each frame consists at least of a synchronous word and a frame counting word indicating the position of the respective frame within the series of frames, and that the termination of the ringing signal is determined in said decoding means by means of evaluating the received frame counting words.

7. A ystem as claimed in claim 6, characterised in that in addition to the synchronous word and the frame counting word, every signal frame also contains further information about the address of the receiver and/or the address of the transmitter and/or at least in part about the result of the active or passive channel analysis.

8. A system as claimed in any one of the preceding claims, characterised in that the acknowledge signal comprises the sorted channel quality values of the channel memory of the opposite station.

9. A system as claimed in any of the preceding claims, characterized in that, when the message transmitting/receiving operation has been started, the quality-sorted channel quality values from the channel memories of both stations are interchanged and an order of quality of the channel quality values which is optimum for both stations is calculated therefrom and stored in both channel memories.

10. A system as claimed in claims 6 to 9, characterised in that, when the receiver of the opposite station receives the ringing signal, the synchronous word contained in the received frames is determined by a known correlation technique, whereby the evaluating means of the receiver is synchronized to the frames.

11. A system as claimed in claim 10, characterised in that during frame synchronization the actually determined signal qualities are utilized to improve the synchronization and the decoding of the other parts of the frame.

12. A system as claimed in claim 11, characterized in that the actually determined signal qualities are supplied to a processor in which, in order to improve the reliability of signal detection, the determined values of the successive identical signals (synchronous word, address word) of the individual frames of the ringing signal are weighted, summed in accordance with their resulting quality, and the thus obtained improved signal sequence is evaluated for frame synchronization.

13. A system as claimed in claims 6 to 12, characterized in that the code of the frame counting word within every frame of the ringing signal is selected such that the previous or the subsequent frame counting word may be determined from any desired, even unknown, frame counting word, that furthermore the successive different frame counting words of the frames are made equal by corresponding incrementation or decrementation of shifting in the processor which performs the weighted addition of the signals, and from these frame counting words an improved signal sequence is obtained by weighted action and is utilized for synchronization.

Fig. 1: Station 1 und Station 2

Fig. 2: Rufsignal